# EUROPÄISCHE PATENTSCHRIFT

(11) **EP 4 065 865 B1**
(45) Veröffentlichungstag und Bekanntmachung des Hinweises auf die Patenterteilung: **25.09.2024**
(21) Anmeldenummer: 20806955.9
(22) Anmeldetag: 11.11.2020
(51) Int. Cl.: F16H 63/04, F16H 63/30

(54) **INTEGRATION EINES GETRIEBESTELLERS**
INTEGRATION OF A TRANSMISSION ACTUATOR
INTÉGRATION D'UN ACTIONNEUR DE BOÎTE DE VITESSES

(30) Priorität: 26.11.2019 DE 102019131935
(43) Veröffentlichungstag der Anmeldung: 05.10.2022
(73) Patentinhaber: KNORR-BREMSE Systeme für Nutzfahrzeuge GmbH, 80809 München (DE)
(72) Erfinder: GEIS-ESSER, Daniel, 81377 München (DE)
(86) Internationale Anmeldenummer: PCT/EP2020/081686
(87) Internationale Veröffentlichungsnummer: WO 2021/104859

(56) Entgegenhaltungen:
- DE-A1- 102009 054 942
- DE-A1- 102012 222 540
- DE-A1- 102013 216 742
- DE-A1- 102014 224 366
- DE-A1- 102016 002 824
- DE-A5- 112011 100 512
- KR-U- 890 004 735
- US-A- 2 616 535
- US-A- 5 794 381
- US-A1- 2015 176 687
- US-A1- 2018 112 773
- US-A1- 2019 353 245

## Beschreibung

Die vorliegende Erfindung bezieht sich auf ein Getriebe mit einem Getriebesteller, einen Antriebsstrang sowie ein Fahrzeug.

In der Fahrzeugentwicklung spielt die optimale Ausnutzung von Bauraum eine entscheidende Rolle. Kann beispielsweise eine Komponente platzsparender ausgeführt werden, so steht der dadurch eingesparte Bauraum entweder für den Einbau anderer Komponenten zur Verfügung oder es kann beispielsweise ein Gehäuse enger um gewisse Komponenten gezogen werden.

Im Getriebebau ist es üblich, einen Getriebesteller zur Einstellung einer Schaltstellung, die durch eine Übersetzungsstufe ("Gang") verkörpert ist, oder zur Einstellung einer Neutralstellung in dem Getriebe vorzusehen, wobei der Getriebesteller hierzu eine Stellbewegung ausführt, die direkt oder über Zwischenelemente auf ein Schaltelement, insbesondere auf eine Schaltmuffe, aufgeprägt wird, wodurch diese verschoben wird, so dass die gewünschte Schaltstellung eingestellt wird. Die Stellbewegung des Getriebestellers ist dabei parallel zu der Getriebewellenachse orientiert, was zur Folge hat, dass auch der Getriebesteller sich im Wesentlichen parallel zu der Getriebewellenachse erstreckt. Hier besteht das Problem, dass zwischen der Außenkontur der Übersetzungsstufen, also beispielsweise zwischen dem Außendurchmesser der Zahnräder auf der Getriebewelle, und dem Getriebesteller freier Bauraum vorliegt.

Eine parallele Anordnung der Stellbewegung sowie der Getriebewellenachse kann insbesondere bei kurzen Getrieben bzw. bei Getrieben mit einer ansteigenden oder abfallenden Gehäusegeometrie Nachteile in Bezug auf Bauraum haben sowie in Bezug auf die mechanische Abstützung hinsichtlich Schwingungen.

Aus dem Stand der Technik sind Mechanismen zur Einstellung von Schaltstellungen in einem Getriebe bekannt. Das gattungsgemässe Dokument DE102016002824A1 zeigt ein automatisiertes Schaltgetriebe, wobei die Betätigungsachse eines Stellgliedes eines Aktuators, das mit Schaltmuffen des Getriebes verbunden ist, senkrecht zur Betätigungsrichtung der Schaltmuffen ausgerichtet ist. US 5 794 381 A zeigt eine selektiv einschaltbare MotorAntriebs-Baugruppe, die zum Bewegen einer Fahrzeugtür oder -rampe betätigt werden kann, um einen manuellen Betrieb oder einen motorisierten Betrieb zu ermöglichen. Die US 2015 / 176 687 A1 zeigt eine elektrische Fahrzeugachse mit einer Übersetzung mit einem schaltbaren Überlagerungsgetriebe mit einer ersten und einer zweiten Gangstufe. Schließlich zeigt die DE 10 2012 222 540 A1 eine Anordnung zum Schalten von zumindest zwei Losrädern an zwei zugeordneten Wellen für ein Getriebe eines Fahrzeugs. Die jeweils im Stand der Technik vorgeschlagenen charakteristischen Orientierungen eines jeweiligen Getriebestellers verlaufen senkrecht gegenüber einer Getriebewelle.

Es ist somit Aufgabe der vorliegenden Erfindung, Möglichkeiten aufzuzeigen, um diesen Bauraum einzusparen.

Diese Aufgabe wird durch die Gegenstände des unabhängigen Anspruchs gelöst. Vorteilhafte Weiterbildungen sind Gegenstand der Unteransprüche.

Erfindungsgemäß ist ein Getriebe mit einem Getriebesteller zum Einstellen zumindest einer Schaltstellung in dem Getriebe, das zumindest eine Getriebewelle aufweist, vorgesehen, wobei der Getriebesteller dazu ausgebildet ist, zum Einstellen der Schaltstellung eine Stellbewegung in einer Stellrichtung auszuführen, wobei eine charakteristische Orientierungsrichtung des Getriebestellers gegenüber der Getriebewellenachse der zumindest einen Getriebewelle nicht parallel orientiert ist wobei die charakteristische Orientierungsrichtung die Stellrichtung ist. Das Getriebe weist zwei unterschiedliche Übersetzungsstufen auf, die durch Zahnradstufen ausgebildet sind und unterschiedliche Außendurchmesser aufweisen. Die Stellrichtung ist im Wesentlichen parallel zu einer Tangente an die Außenkontur der zwei Übersetzungsstufen angeordnet, wobei die zwei Übersetzungsstufen auf derselben Getriebewelle angeordnet sind.

Vorzugsweise ist die charakteristische Orientierungsrichtung eine Haupterstreckungsrichtung des Getriebestellers, in der die maximale Erstreckung des Getriebestellers gegenüber den Erstreckungen des Getriebestellers in den anderen beiden Raumrichtungen verläuft. Weist der Getriebesteller beispielsweise im Wesentlichen eine Breite von 100mm, eine Tiefe von 70mm und eine Länge von 200mm auf, so ist die Erstreckungsrichtung, entlang der sich die Länge des Getriebestellers erstreckt, die Haupterstreckungsrichtung bzw. die charakteristische Orientierungsrichtung. Die charakteristische Orientierungsrichtung ist die Stellrichtung des Getriebestellers.

Der Getriebesteller weist demnach bevorzugt eine Ausbildung auf, die erlaubt, den Getriebesteller in oder an dem Getriebe zu montieren, so dass dessen Haupterstreckungsrichtung und/oder dessen Stellrichtung nicht parallel zu der Getriebewellenachse orientiert sind/ist. Insbesondere kann der Getriebesteller zur Montage mittels Befestigungsmitteln, wie z.B. Schrauben, ausgebildet sein.

Vorzugsweise sind die Haupterstreckungsrichtung und die Stellrichtung des Getriebestellers parallel zueinander bzw. miteinander identisch.

Vorzugsweise sind die charakteristische Orientierungsrichtung des Getriebestellers und die Getriebewellenachse der zumindest einen Getriebewelle so zueinander orientiert, dass sie sich unter einem Winkel schneiden. Alternativ kann auch eine windschiefe Orientierung der charakteristischen Orientierungsrichtung des Getriebestellers und der Getriebewellenachse vorgesehen sein.

Vorzugsweise ist der Getriebesteller hydraulisch, pneumatisch, elektrisch, magnetisch und/oder mechanisch betätigbar. Die Stellbewegung ist dabei bevorzugt translatorisch ausgebildet. Bei hydraulischer oder pneumatischer Betätigung ist bevorzugt ein Kolben vorgesehen, der durch einen hydraulischen oder pneumatischen Druck bewegt wird, um die Stellbewegung auszuführen. Eine mechanische Betätigung kann insbesondere durch eine Kombination aus Zahnstange und Ritzel, durch ein Schneckengetriebe oder durch eine Kugelumlaufspindel realisiert sein. Bei elektrischer oder magnetischer Betätigung wird die benötigte Kraft durch elektrische oder magnetische Felder erzeugt. Schließlich können auch verschiedene Prinzipien kombiniert sein. So kann beispielsweise ein Elektromotor eine Kugelumlaufspindel antreiben, wodurch mechanisch eine Stellbewegung hervorgerufen wird.

Die charakteristische Orientierungsrichtung, insbesondere die Stellrichtung und/oder die Haupterstreckungsrichtung, ist im Wesentlichen parallel zu einer Tangente an die Außenkontur von zwei Übersetzungsstufen angeordnet, wobei die zwei Übersetzungsstufen auf derselben Getriebewelle angeordnet sind. So wird erreicht, dass der Getriebesteller entsprechend der Außenkontur der Übersetzungsstufen orientiert werden kann, wodurch insbesondere die gewünschte Bauraumeinsparung erreicht wird. Die Übersetzungsstufen sind durch Zahnradstufen ausgebildet. Als Außenkontur kann die äußerste Abmessung der Übersetzungsstufen gesehen werden. Bei einer Zahnradstufe entspricht dies dem Außen- bzw. Kopfkreisdurchmesser des Zahnrades.

Vorzugsweise weist das Getriebe einen Übertragungsmechanismus zum Übertragen einer Stellbewegung, insbesondere eines Getriebestellers wie oben beschrieben, auf, der einen ersten Koppelpunkt
aufweist, der dazu ausgebildet ist, mit dem Getriebesteller, in Kontakt zu treten und dessen Stellbewegung aufzunehmen, und der
einen zweiten Koppelpunkt aufweist, der dazu ausgebildet ist, mit einem Schaltelement des Getriebes, insbesondere mit einer Schaltmuffe, in Kontakt zu treten, wobei der Übertragungsmechanismus dazu ausgebildet ist, die Stellbewegung in eine Schaltbewegung umzusetzen, die eine Einstellung einer Schaltstellung in dem Getriebe bewirkt. So kann vorteilhafterweise erreicht werden, dass die geradlinige Stellbewegung des Getriebestellers eben nicht parallel zu der Schaltbewegung des Schaltelements umgesetzt werden muss. Stattdessen ist nun eine Möglichkeit geschaffen, den Getriebesteller unter einer anderen Orientierung in dem Getriebe vorzusehen. Der Übertragungsmechanismus kann jedoch auch geeignet ausgebildet sein, um eine Stellbewegung, die parallel zu der Getriebewellenachse orientiert ist, in eine Schaltbewegung umzusetzen.

Unter dem Begriff "Koppelpunkt" wird in dieser Anmeldung insbesondere eine Stelle bzw. ein Element des Übertragungsmechanismus' verstanden worüber die Stellbewegung auf den Übertragungsmechanismus aufgeprägt werden kann, bzw. worüber die Schaltbewegung abgegeben werden kann. Die Koppelpunkte stellen daher Schnittstellen dar, über die der Übertragungsmechanismus mit dem Getriebesteller bzw. mit dem Schaltelement in Kontakt treten kann. Diese Schnittstellen können unterschiedlich ausgebildet sein, wie weiter unten beispielhaft gezeigt wird.

Vorzugsweise weist der Übertragungsmechanismus ein Übertragungselement auf, das dazu ausgebildet ist, die Stellbewegung in die Schaltbewegung umzusetzen. Das Übertragungselement kann beispielsweise als Stab ausgebildet sein oder einen Stab aufweisen.

Vorzugsweise ist das Übertragungselement dazu ausgebildet, eine Übersetzung der Stellbewegung in die Schaltbewegung zu bewirken. Dabei können sowohl eine Überals auch eine Untersetzung vorgesehen sein. Auch eine 1:1-Übersetzung ist denkbar, so dass die Stellbewegung einer Bewegung entspricht, die eine gleichlange Strecke zurücklegt, wie die daraus resultierende Schaltbewegung. Bei einer Untersetzung, d.h. wenn die Stellbewegung eine längere Strecke zurücklegt als die daraus resultierende Schaltbewegung, ist vorteilhaft, dass der Getriebesteller, der die Stellbewegung ausführt, kleiner bzw. leistungsschwächer im Vergleich zu einer Ausführungsform mit Übersetzung ausgelegt werden kann, da gleichzeitig die Kraft, die über den Übertragungsmechanismus von dem Getriebesteller auf das Schaltelement aufgebracht wird, vergrößert wird. Bei einer Übersetzung ist wiederum vorteilhaft, dass die Strecke, die die Stellbewegung zurücklegt, kleiner als die Strecke der Schaltbewegung ist. Dadurch muss weniger Bauraum für den Getriebesteller bzw. für dessen Stellbewegung vorgesehen werden.

Vorzugsweise ist das Übertragungselement drehbar gelagert und dazu ausgebildet, durch die Stellbewegung mittels Drehung eine Schaltbewegung zu erzeugen. Das Übertragungselement ist hierbei bevorzugt in einem Drehpunkt, der zwischen den Koppelpunkten liegt, drehbar gelagert. Die Übersetzung kann somit durch die jeweiligen Abstände zwischen Drehpunkt und den jeweiligen Koppelpunkten bestimmt werden, wobei weitere Einflüsse, wie beispielsweise eine Kontaktflächenpaarung oder ein Längenausgleich, wie weiter unten beschrieben, die Übersetzung weiter beeinflussen können.

Der Drehpunkt ist vorzugsweise am Getriebesteller vorgesehen oder im Getriebesteller integriert, sodass der Getriebesteller und das Übertragungselement eine integrale Einheit bilden, die entsprechend einfach direkt auf das Getriebe montiert werden kann, wobei besonders bevorzugt das Übertragungselement bei der Montage direkt eine mechanische Verbindung zu dem Schaltelement (z.B. durch Eingriff in eine Schaltmuffe) herstellt.

Das Übertragungselement kann speziell als Schaltgabel ausgebildet sein, oder neben weiteren Elementen eine Schaltgabel aufweisen. Die Schaltgabel ist vorzugsweise dazu ausgebildet, mit dem Schaltelement in dem zweiten Koppelpunkt verbunden zu werden, um auf dieses die Schaltbewegung aufzuprägen.

Vorzugsweise ist das Übertragungselement translatorisch verschiebbar, insbesondere parallel verschiebbar zur Getriebewellenachse, ausgebildet, um die Umsetzung der Stellbewegung in die Schaltbewegung zu bewirken. Die translatorische Verschiebbarkeit kann alternativ oder zusätzlich zu der drehbaren Lagerung des Übertragungselementes vorgesehen sein. Bei einer zusätzlichen Verschiebbarkeit ist in Kombination mit der drehbaren Lagerung auch eine komplexe Bewegung des Übertragungselementes möglich, um die Stellbewegung in eine Schaltbewegung zu übersetzen.

Vorzugsweise weist der Übertragungsmechanismus einen Längenausgleichsmechanismus auf, der dazu ausgebildet ist, einen Längenausgleich zwischen den Koppelpunkten bei Aufbringen der Stellbewegung durchzuführen. Da die Stellbewegung nicht parallel zu der Getriebewellenachse orientiert ist muss zwischen den Koppelpunkten ein Längenausgleich durchgeführt werden. Dieser Längenausgleichsmechanismus kann unterschiedlich ausgebildet sein. Ist die Verbindung des Getriebestellers bzw. des Schaltelements in dem jeweiligen Koppelpunkt mittels eines Lagers, das eine Drehbewegung zwischen Getriebesteller bzw. Schaltelement und Übertragungsmechanismus zulässt, realisiert, so muss zwischen beiden Koppelpunkten ein Längenausgleich durchgeführt werden. Gleiches gilt auch, wenn die Verbindung in den Koppelpunkten keine Drehbewegung zulässt. Der Längenausgleichsmechanismus ist bevorzugt als Teil des Übertragungselementes ausgebildet. Als Lager kann beispielsweise ein Wälz- oder Gleitlager vorgesehen sein.

Vorzugsweise weist der Längenausgleichsmechanismus eine elastische Vorspannung auf, die zwischen den Koppelpunkten wirkt. Diese elastische Vorspannung kann vorzugsweise durch eine Feder erzeugt werden. Durch die elastische Vorspannung wird bevorzugt bewirkt, dass der Längenausgleichsmechanismus stets mit einer Kraft beaufschlagt wird, so dass das Übertragungselement stets bestrebt ist, sich zwischen den Koppelpunkten auszudehnen.

Vorzugsweise ist ein Getriebe vorgesehen, das einen Getriebesteller, wie oben beschrieben, und einen Übertragungsmechanismus, wie oben beschrieben, aufweist, wobei der Getriebesteller über den ersten Koppelpunkt mit dem Übertragungsmechanismus zur Aufprägung der Stellbewegung auf den Übertragungsmechanismus verbunden ist.

Weist der Übertragungsmechanismus ein um einen Drehpunkt drehbares Übertragungselement auf, so ist dieser Drehpunkt vorzugsweise an dem Getriebesteller vorgesehen oder in diesen integriert, wie bereits oben ausgeführt.

Vorzugsweise ist die Verbindung zwischen dem Getriebesteller und dem Übertragungsmechanismus in dem ersten Koppelpunkt drehfest ausgebildet. Alternativ oder zusätzlich kann diese Verbindung auch einstückig ausgebildet sein. D.h. in dem ersten Koppelpunkt sind ein Element des Übertragungsmechanismus', vorzugsweise das Element, das die Schaltbewegung auf das Schaltelement überträgt, und das Element des Getriebestellers, das die Stellbewegung ausführt, als ein Bauteil ausgebildet.

Alternativ kann die Verbindung zwischen dem Getriebesteller und dem Übertragungsmechanismus in dem ersten Koppelpunkt auch drehbar ausgebildet sein oder eine Kontaktflächenpaarung aufweisen. Eine drehbare Ausbildung kann insbesondere durch ein Gleit- oder Wälzlager erreicht werden, über das der Übertragungsmechanismus, vorzugsweise dessen Übertragungselement, und das Element des Getriebestellers, das die Stellbewegung durchführt, verbunden sind. Bei einer Kontaktflächenpaarung besteht die Verbindung zwischen dem Übertragungsmechanismus, vorzugsweise dem Übertragungselement, und dem Element des Getriebestellers, das die Stellbewegung durchführt, durch einen Kontakt beider Elemente. Diese sind so konzipiert, dass sie lediglich aneinander anstoßen, so dass die Stellbewegung auf den Übertragungsmechanismus aufgeprägt werden kann. Dazu sind Kontaktflächen an beiden Elementen ausgebildet. Insbesondere bei drehbar vorgesehenem Übertragungselement oder zur Realisierung eines Längenausgleichs, kann die Kontaktflächenpaarung so ausgebildet sein, dass beide Kontaktflächen in ihrem Kontakt aneinander abwälzen und/oder abgleiten und/oder eine Relativbewegung zueinander ausführen, um die Drehbewegung bzw. den Längenausgleich darzustellen.

Vorzugsweise ist ein Getriebe vorgesehen, wie oben beschrieben, das ein Schaltelement, insbesondere eine Schaltmuffe, aufweist. Dabei ist das Schaltelement dazu ausgebildet, eine Schaltbewegung durchzuführen, um in dem Getriebe eine Schaltstellung einzustellen. Dabei ist das Schaltelement über den zweiten Koppelpunkt mit dem Übertragungsmechanismus zur Aufprägung der Schaltbewegung auf das Schaltelement verbunden.

Vorzugsweise ist der Getriebesteller so in dem Getriebe angeordnet, dass eine charakteristische Orientierungsrichtung des Getriebestellers, wie oben beschrieben, nicht parallel zu einer Getriebewellenachse angeordnet ist. Besonders bevorzugt ist die charakteristische Orientierungsrichtung, insbesondere die Stellrichtung und/oder die Haupterstreckungsrichtung, im Wesentlichen parallel zu einer Tangente an die Außenkontur von zwei Übersetzungsstufen angeordnet, wobei die zwei Übersetzungsstufen vorzugsweise auf derselben Getriebewelle angeordnet sind.

Vorzugsweise ist die Verbindung zwischen dem Schaltelement und dem Übertragungsmechanismus in dem zweiten Koppelpunkt drehfest ausgebildet. Alternativ oder zusätzlich kann diese Verbindung auch einstückig ausgebildet sein. D.h. in dem zweiten Koppelpunkt sind ein Element des Übertragungsmechanismus', vorzugsweise das Element, dem die Stellbewegung des Getriebestellers aufgeprägt wird, und das Schaltelement, als ein Bauteil ausgebildet.

Alternativ kann die Verbindung zwischen dem Schaltelement und dem Übertragungsmechanismus in dem zweiten Koppelpunkt drehbar ausgebildet sein oder eine Kontaktflächenpaarung aufweisen. Eine drehbare Ausbildung kann insbesondere durch ein Gleit- oder Wälzlager erreicht werden, über das der Übertragungsmechanismus, vorzugsweise dessen Übertragungselement, und das Schaltelement verbunden sind. Bei einer Kontaktflächenpaarung besteht die Verbindung zwischen dem Übertragungsmechanismus, vorzugsweise dem Übertragungselement, und dem Schaltelement durch einen Kontakt beider Elemente. Diese sind so konzipiert, dass sie lediglich aneinander anstoßen, so dass die Schaltbewegung auf das Schaltelement aufgeprägt werden kann. Dazu sind Kontaktflächen an beiden Elementen ausgebildet. Insbesondere bei drehbar vorgesehenem Übertragungselement oder zur Realisierung eines Längenausgleichs, kann die Kontaktflächenpaarung so ausgebildet sein, dass beide Kontaktflächen in ihrem Kontakt aneinander abwälzen und/oder abgleiten und/oder eine Relativbewegung zueinander ausführen, um die Drehbewegung bzw. den Längenausgleich darzustellen.

Übertragungsmechanismus, vorzugsweise dessen Übertragungselement, und das Schaltelement verbunden sind. Bei einer Kontaktflächenpaarung besteht die Verbindung zwischen dem Übertragungsmechanismus, vorzugsweise dem Übertragungselement, und dem Schaltelement durch einen Kontakt beider Elemente. Diese sind so konzipiert, dass sie lediglich aneinander anstoßen, so dass die Schaltbewegung auf das Schaltelement aufgeprägt werden kann. Dazu sind Kontaktflächen an beiden Elementen ausgebildet. Insbesondere bei drehbar vorgesehenem Übertragungselement oder zur Realisierung eines Längenausgleichs, kann die Kontaktflächenpaarung so ausgebildet sein, dass beide Kontaktflächen in ihrem Kontakt aneinander abwälzen und/oder abgleiten und/oder eine Relativbewegung zueinander ausführen, um die Drehbewegung bzw. den Längenausgleich darzustellen. Erfindungsgemäß ist ein Antriebsstrang für ein Fahrzeug vorgesehen, der ein Getriebe wie oben beschrieben aufweist.

Erfindungsgemäß ist ein Fahrzeug vorgesehen, das ein Getriebe, wie oben beschrieben, oder einen Antriebsstrang, wie oben beschrieben, aufweist. Vorzugsweise ist das Fahrzeug elektrisch oder hybridisch angetrieben und/oder als Nutzfahrzeug ausgebildet.

Die Erfindung, welche durch die nachfolgenden Ansprüche definiert wird, ist nicht auf die oben beschriebenen Ausführungsformen beschränkt Vielmehr können weitere Ausführungsformen erhalten werden, indem einzelne Merkmale miteinander kombiniert, durch andere ersetzt oder weggelassen werden. Nachfolgend wird die Erfindung daher anhand bevorzugter Ausführungsbeispiele unter Zuhilfenahme der beigefügten Zeichnungen näher beschrieben.

Der Getriebesteller 1 ist dazu ausgebildet, eine Stellbewegung 1a durchzuführen, die in der Zeichnung durch den Doppelpfeil als translatorische Bewegung dargestellt ist. Die Stellbewegung 1a kann somit parallel zu einer Stellrichtung 1b ausgeführt werden, die in der Zeichnung durch eine gestrichelte Linie angedeutet ist. Die Stellrichtung 1b ist gegenüber der Getriebewellenachse 2a um einen Neigungswinkel 7 geneigt, so dass die Stellrichtung 1b und die Getriebewellenachse 2a nicht parallel zueinander orientiert sind. In der gezeigten Ausführungsform entspricht die Stellrichtung 1b der charakteristischen Orientierungsrichtung des Getriebestellers 1, wie oben beschrieben.

Die Getriebewelle 2, deren Getriebewellenachse 2a waagrecht von links nach rechts orientiert ist, weist ein erstes Zahnrad 3 und ein zweites Zahnrad 4 auf, die drehbar auf der Getriebewelle 2 vorgesehen sind. Beide Zahnräder 3, 4 weisen unterschiedliche Radien auf und bilden somit unterschiedliche Übersetzungsstufen. Weiter ist zwischen den Zahnrädern 3, 4 ein Schaltelement 5 in Form einer Schaltmuffe auf der Getriebewelle 2 vorgesehen. Dieses Schaltelement 5 ist in einer Schaltbewegung 5a verschiebbar ausgebildet, die hier als translatorische Bewegung parallel zur Getriebewellenachse 2a orientiert ist. Das Schaltelement 5 ist drehfest um die Getriebewellenachse 2a auf der Getriebewelle 2 vorgesehen.

Die hier gezeigte Anordnung von Getriebewelle 2, Zahnrädern 3, 4 und Schaltelement 5 entspricht einer Anordnung, wie sie aus dem Getriebebau bekannt ist. Zum Einstellen einer Schaltstellung, beispielsweise über die Übersetzungsstufe, die durch das erste Zahnrad 3 verkörpert ist, wird das Schaltelement 5 entsprechend einer Schaltbewegung 5a nach rechts bewegt. Hier tritt das Schaltelement 5 mit dem ersten Zahnrad 3 in Kontakt und bildet um die Getriebewellenachse 2a eine drehfeste Verbindung aus, so dass nun das erste Zahnrad 3 über das Schaltelement 5 drehfest mit der Getriebewelle 2 verbunden ist. Das Einstellen der Schaltstellung, der über die Übersetzungsstufe, die durch das zweite Zahnrad 4 verkörpert ist, erfolgt analog durch eine Schaltbewegung 5a des Schaltelements 5 nach links.

In der gezeigten Anordnung ist die Stellrichtung 1b entsprechend der Außenkontur der Übersetzungsstufen der Getriebewelle 2 orientiert. Konkret bedeutet dies, dass die Stellrichtung 1b parallel zu einer Tangente an die Zahnräder 3, 4 orientiert ist. Allgemein kann eine solche Orientierung auch parallel zu einer dreidimensionalen Hüllkurve an die Übersetzungsstufen erfolgen.

Weiter ist zur Übertragung der Stellbewegung 1a an das Schaltelement 5 ein Übertragungsmechanismus 8 vorgesehen, so dass das Schaltelement 5 die Schaltbewegung 5a ausführen kann. Der Übertragungsmechanismus 8 weist einen ersten Koppelpunkt 8a auf, über den der Getriebesteller 1 mit dem Übertragungsmechanismus 8 gekoppelt ist. Der Übertragungsmechanismus 8 weist einen weiteren zweiten Koppelpunkt 8b auf, über den das Schaltelement 5 mit dem Übertragungsmechanismus 8 gekoppelt ist.

Der Übertragungsmechanismus 8 weist ferner ein Übertragungselement 8c auf, das um einen Drehpunkt 8d drehbar vorgesehen ist und das dazu ausgebildet ist, die Stellbewegung 1a, die auf den ersten Koppelpunkt 8a aufgeprägt wird, in die Schaltbewegung 5a zu übersetzen.

Die Verbindung von Getriebesteller 1 und Schaltelement 5 kann in den Koppelpunkten 8a, 8b unterschiedlich ausgeführt sein.

In einer Ausführungsform kann zumindest eine Verbindung in einem der beiden Koppelpunkte 8a, 8b gelenkig ausgebildet sein, so dass sich das Übertragungselement 8c um den ersten Koppelpunkt 8a relativ zu dem Getriebesteller 1 und/oder um den zweiten Koppelpunkt 8b relativ zu dem Schaltelement 5 drehen kann. Dabei kann beispielsweise vorgesehen sein, dass in dem entsprechenden Koppelpunkt 8a, 8b ein Lager, insbesondere ein Gleit- oder Wälzlager, vorgesehen ist. Bei einer solchen Verbindung muss der Teil des Übertragungselementes 8c, der mit dem entsprechenden Koppelpunkt 8a, 8b verbunden ist, dem Lager stets folgen können. Daher muss aufgrund der nicht parallelen Orientierung der Getriebewellenachse 2a zu der Bewegungsrichtung 1b unter dem Winkel 7, bei einer Drehbewegung des Übertragungsmechanismus' 8 um den Drehpunkt 8d ein Längenausgleich durchgeführt werden, um den ersten Koppelunkt 8a parallel zu der Stellrichtung 1b und den zweiten Koppelpunkt 8b parallel zu der Getriebewellenachse 2a nachzuführen. Dazu weist der Übertragungsmechanismus 8 einen Längenausgleichsmechanismus (nicht gezeigt) auf, der dazu ausgebildet ist, den Längenausgleich zwischen beiden Koppelpunkten 8a, 8b durchzuführen.

Der Längenausgleichsmechanismus kann beispielsweise durch ein Übertragungselement 8c realisiert sein, das zwischen den Koppelpunkten 8a, 8b in seiner Erstreckung veränderbar ausgebildet ist. Bei einer Drehbewegung des Übertragungselementes 8c ist dabei gewährleistet, dass das Übertragungselement 8c dem sich ändernden Abstand der Koppelpunkte 8a, 8b folgen kann.

Der Längenausgleichsmechanismus kann darüber hinaus eine elastische Vorspannkraft aufweisen, die beispielsweise durch eine Feder aufgebracht werden kann. Die elastische Vorspannkraft ist dabei so orientiert, dass sie zwischen den Koppelpunkten 8a, 8b wirkt und so orientiert ist, dass sie stets in Erstreckungsrichtung des Übertragungselementes 8c wirkt. Auf diese Weise kann eine Längenänderung des Stabes durch die elastische Vorspannkraft unterstützt werden, so dass der Längenausgleich zuverlässig erfolgen kann.

In einer konkreten Ausführungsform kann ein Längenausgleichsmechanismus ein Übertragungselement 8c in Form eines Stabes aufweisen, der mit seinen Enden in den Koppelpunkten 8a, 8b mittels Gleit- oder Wälzlagern drehbar an den Getriebesteller 1 bzw. an das Schaltelement 5 angebunden ist. Der Stab erstreckt sich somit zwischen den Koppelpunkten 8a, 8b. Darüber hinaus ist eine Feder vorgesehen, deren elastische Vorspannkraft zwischen den Koppelpunkten 8a, 8b wirkt und den Stab dazu veranlasst, stets seine Erstreckung zwischen den Koppelpunkten 8a, 8b zu maximieren.

Die Verbindung des Übertragungselementes 8c in zumindest einem der Koppelpunkte 8a, 8b kann jedoch auch als abwälzende und/oder abgleitende Ankopplung ausgebildet sein. Dazu ist in zumindest einem der Koppelpunkte 8a, 8b eine Kontaktflächenpaarung (nicht gezeigt) ausgebildet, über die das Übertragungselement 8c mit dem Getriebesteller 1 und/oder mit dem Schaltelement 5 in Kontakt steht. Die Stellbewegung 1b des Getriebestellers 1 kann nun über die Kontaktflächenpaarung in dem ersten Koppelpunkt 8a auf das Übertragungselement 8c übertragen werden, wobei eine Kontaktfläche auf dem Getriebesteller 1 und die andere Kontaktfläche auf dem Übertragungselement 8c ausgebildet ist. Genauso kann auch eine Drehbewegung des Übertragungselementes 8c auf das Schaltelement 5 übertragen werden. Auch hier kann in dem zweiten Koppelpunkt 8b eine Kontaktflächenpaarung vorgesehen sein, wobei eine Kontaktfläche auf dem Schaltelement 5 und die andere Kontaktfläche auf dem Übertragungselement 8c ausgebildet ist. Die jeweiligen Kontaktflächen in den Kontaktflächenpaarungen sind dazu ausgebildet, um aneinander abzuwälzen und/oder abzugleiten. Dazu kann zumindest eine Kontaktfläche gekrümmt ausgebildet sein. Dreht sich das Übertragungselement 8c um den Drehpunkt 8d, so erfolgt ein Abwälzen und/oder Abgleiten der Kontaktflächen in den entsprechenden Kontaktflächenpaarungen. Dabei wandert aufgrund des Abwälz-und/oder Abgleitvorgangs der Kontaktpunkt zwischen den Kontaktflächen innerhalb der Kontaktflächenpaarung. Ein Längenausgleich muss daher hier nicht zwingend vorgesehen sein, da dies durch den wandernden Kontaktpunkt realisiert ist.

Die Verbindung des Übertragungselementes 8c in zumindest einem der Koppelpunkte 8a, 8b mit dem Getriebesteller 1 und/oder mit dem Schaltelement 5 kann auch einstückig ausgebildet sein. D.h. ein Element des Getriebestellers 1 das die Stellbewegung 1a ausführt, ist in dem ersten Koppelpunkt 8a einstückig mit dem Übertragungselement 8c ausgebildet. Alternativ oder zusätzlich kann auch das Schaltelement 5 in dem zweiten Koppelpunkt 8b einstückig mit dem Übertragungselement 8c ausgebildet sein.

Der Getriebesteller 1 ist je nach Ausführungsform insbesondere hydraulisch, pneumatisch, elektrisch, magnetisch und/oder mechanisch betätigbar.

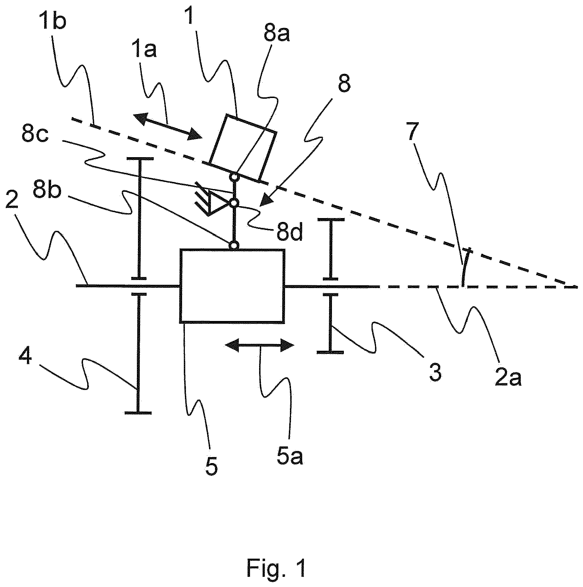

Die Funktionsweise der gezeigten Anordnung stellt sich wie folgt dar:
Zunächst ist die gezeigte Anordnung wie dargestellt angeordnet. Das Schaltelement 5 befindet sich zwischen den Zahnrädern 3, 4. Somit befindet sich die Anordnung in der Neutralstellung. Zum Einstellen einer Schaltstellung, die durch das erste Zahnrad 3 verkörpert ist, führt der Getriebesteller 1 eine Stellbewegung 1a in Stellrichtung 1b in der Zeichnung nach links oben aus. Dadurch wird der erste Koppelpunkt 8a entlang der Stellrichtung 1b nach links oben bewegt wodurch das Übertragungselement 8c um den Drehpunkt 8d gegen den Uhrzeigersinn gedreht wird. Dadurch wird weiter der zweite Koppelpunkt 8b und somit das Schaltelement 5 in einer Schaltbewegung 5a nach rechts parallel zu der Getriebewellenachse 2a bewegt. Dies erfolgt so weit, bis das Schaltelement 5 an das erste Zahnrad 3 stößt, wodurch, wie oben beschrieben, die gewünschte Schaltstellung eingestellt wird. Das Einstellen einer anderen Schaltstellung, nämlich der, die durch das zweite Zahnrad 4 verkörpert ist oder der Neutralstellung, erfolgt analog durch eine entsprechende Stellbewegung 1a des Getriebestellers 1 nach rechts unten bzw. zurück in die in Fig. 1 gezeigte Stellung.

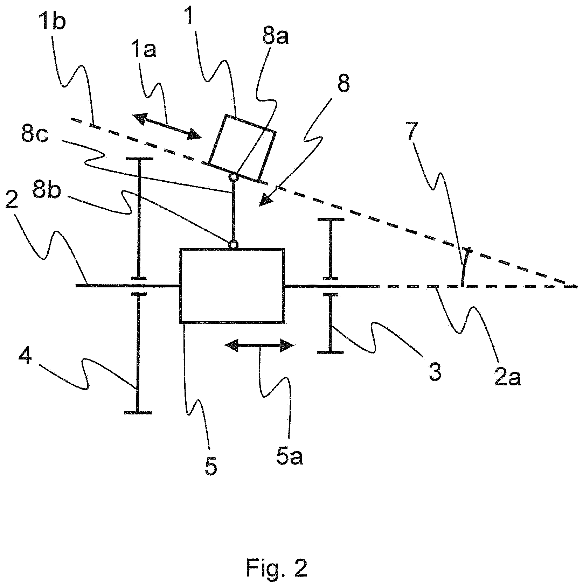

Fig. 2 zeigt eine zweite Ausführungsform der Erfindung. Auch hier ist eine Anordnung eines Getriebestellers 1, eines Übertragungsmechanismus' 8 sowie einer Getriebewelle 2 in einer Schnittdarstellung gezeigt. Die hier gezeigte Ausführungsform unterscheidet sich von der aus Fig. 1 durch eine andere Ausbildung des Übertragungsmechanismus' 8. Der Getriebesteller 1 sowie die Getriebewelle 2 sind mit denen aus Fig. 1 identisch. Daher wird zu deren Erläuterung auf die Ausführungen zu Fig. 1 verwiesen.

Auch hier entspricht die Stellrichtung 1b des Getriebestellers 1 der charakteristischen Orientierungsrichtung des Getriebestellers 1.

Der Übertragungsmechanismus 8 weist hier ein Übertragungselement 8c auf, das in einem ersten Koppelpunkt 8a mit dem Getriebesteller 1 und in einem zweiten Koppelpunkt 8b mit dem Schaltelement 5 verbunden ist. Im Gegensatz zu der Ausführungsform, die in Fig. 1 gezeigt ist, ist das Übertragungselement 8c hier nicht drehbar gelagert. Stattdessen ist es parallel verschiebbar zu der Getriebewellenachse 2a vorgesehen. Dies kann beispielsweise durch eine Führung (nicht gezeigt) realisiert sein, die das Übertragungselement 8c parallel zu der Getriebewellenachse 2a führt. Die Führung kann weiterhin dazu ausgebildet sein, das Übertragungselement 8c so zu führen, dass es an einer Drehung, deren Drehachse senkrecht zur Zeichenebene orientiert ist, gehindert wird.

Die Verbindung in den Koppelpunkten 8a, 8b zwischen dem Übertragungselement 8c und dem Getriebesteller 1 bzw. dem Schaltelement 5 kann hier ebenso ausgebildet sein, wie bei der Ausführungsform aus Fig. 1. Somit können drehbare, drehfeste, einstückige Ausbildungen und/oder Kontaktflächenpaarungen vorgesehen sein, wie sie oben zu Fig. 1 beschrieben wurden.

Bei der Durchführung einer Stellbewegung durch den Getriebesteller 1 muss auch hier ein Längenausgleichsmechanismus (nicht gezeigt) zwischen den Koppelpunkten 8a, 8b vorgesehen sein, um einen Längenausgleich durchzuführen. Auch dieser kann wie zu Fig. 1 beschrieben ausgebildet sein.

Die Funktionsweise der gezeigten Anordnung stellt sich wie folgt dar:
Zunächst ist die gezeigte Anordnung wie dargestellt angeordnet. Das Schaltelement 5 befindet sich zwischen den Zahnrädern 3, 4. Somit befindet sich die Anordnung in der Neutralstellung. Zum Einstellen einer Schaltstellung, die durch das erste Zahnrad 3 verkörpert ist, führt der Getriebesteller 1 eine Stellbewegung 1a in Stellrichtung 1b in der Zeichnung nach rechts unten aus. Dadurch wird der erste Koppelpunkt 8a entlang der Stellrichtung 1b nach rechts unten bewegt wodurch das Übertragungselement 8c nach rechts verschoben wird. Dadurch wird weiter der zweite Koppelpunkt 8b und somit das Schaltelement 5 in einer Schaltbewegung 5a nach rechts parallel zu der Getriebewellenachse 2a bewegt. Beide Koppelpunkte 8a, 8b bewegen sich hierbei aufeinander zu, da der Längenausgleichsmechanismus eine Verkürzung des Übertragungselement 8c zulässt. Die Schaltbewegung 5a nach rechts erfolgt so weit, bis das Schaltelement 5 an das erste Zahnrad 3 stößt, wodurch, wie oben beschrieben, die gewünschte Schaltstellung eingestellt wird. Das Einstellen einer anderen Schaltstellung, nämlich der, die durch das zweite Zahnrad 4 verkörpert ist oder der Neutralstellung, erfolgt analog durch eine entsprechende Stellbewegung 1a des Getriebestellers 1 nach links oben bzw. zurück in die gezeigte Stellung.

Neben den hier gezeigten Ausführungsformen sind weitere Ausführungsformen denkbar, bei denen die Stellrichtung 1b des Getriebestellers 1 nicht parallel zu einer Tangente an die Zahnräder 3, 4 orientiert ist. Vielmehr kann die Stellrichtung 1b beliebig orientiert sein. Stattdessen kann eine Haupterstreckungsrichtung des Getriebestellers 1 als charakteristische Orientierungsrichtung parallel zu der Tangente an die Zahnräder 3, 4 orientiert sein. Somit ist sichergestellt, dass sich der Getriebesteller 1 mit seiner größten Erstreckungsrichtung an die Außenkontur der Übersetzungsstufen, die durch die Zahnräder 3, 4 verkörpert sind, anpasst.

### BEZUGSZEICHENLISTE

- 1: Getriebesteller
- 1a: Stellbewegung
- 1b: Stellrichtung
- 2: Getriebewelle
- 2a: Getriebewellenachse
- 3: erstes Zahnrad
- 4: zweites Zahnrad
- 5: Schaltelement
- 5a: Schaltbewegung
- 7: Neigungswinkel
- 8: Übertragungsmechanismus
- 8a: erster Koppelpunkt
- 8b: zweiter Koppelpunkt
- 8c: Übertragungselement
- 8d: Drehpunkt

## Patentansprüche

1. Getriebe mit einem Getriebesteller (1) zum Einstellen zumindest einer Schaltstellung in dem Getriebe, das zumindest eine Getriebewelle (2) aufweist, wobei
die Schaltstellung durch eine Übersetzungsstufe verkörpert ist, wobei
der Getriebesteller (1) zum Einstellen der mindestens einen Schaltstellung dazu ausgebildet ist, eine Stellbewegung (1a) in einer Stellrichtung (1b) auszuführen, wobei
eine charakteristische Orientierungsrichtung des Getriebestellers (1) gegenüber der Getriebewellenachse (2a) der zumindest einen Getriebewelle (2) nicht parallel orientiert ist, wobei
die charakteristische Orientierungsrichtung die Stellrichtung (1b) ist, wobei
das Getriebe zwei unterschiedliche Übersetzungsstufen aufweist, die durch Zahnradstufen ausgebildet sind und unterschiedliche Außendurchmesser aufweisen,
**dadurch gekennzeichnet, dass**
die Stellrichtung (1b) im Wesentlichen parallel zu einer Tangente an die Außenkontur der zwei Übersetzungsstufen angeordnet ist, wobei die zwei Übersetzungsstufen auf derselben Getriebewelle (2) angeordnet sind.

2. Getriebe nach Anspruch 1, wobei
der Getriebesteller (1) hydraulisch, pneumatisch, elektrisch, magnetisch und/oder mechanisch betätigbar ist.

3. Getriebe nach Anspruch 1 oder 2, aufweisend:
- einen Übertragungsmechanismus (8) zum Übertragen der Stellbewegung (1a), des Getriebestellers (1), wobei der Übertragungsmechanismus (8) aufweist:
- einen ersten Koppelpunkt (8a), der dazu ausgebildet ist, mit dem Getriebesteller (1), in Kontakt zu treten und dessen Stellbewegung (1a) aufzunehmen, und
- einen zweiten Koppelpunkt (8b), der dazu ausgebildet ist, mit einem Schaltelement (5) des Getriebes, insbesondere mit einer Schaltmuffe, in Kontakt zu treten, wobei
der Übertragungsmechanismus (8) dazu ausgebildet ist, die Stellbewegung (1a) in eine Schaltbewegung (5a) umzusetzen, die eine Einstellung einer Schaltstellung in dem Getriebe bewirkt.

4. Getriebe nach Anspruch 3, aufweisend
ein Übertragungselement (8c), das dazu ausgebildet ist, die Stellbewegung (1a) in die Schaltbewegung (5a) umzusetzen.

5. Getriebe nach Anspruch 4, wobei
das Übertragungselement (8c) dazu ausgebildet ist, eine Übersetzung der Stellbewegung (1a) in die Schaltbewegung (5a) zu bewirken.

6. Getriebe nach Anspruch 4 oder 5, wobei
das Übertragungselement (8c) drehbar gelagert ist und dazu ausgebildet ist, bei Aufprägen der Stellbewegung (1a) mittels Drehung um einen Drehpunkt (8d) eine Schaltbewegung (5a) zu erzeugen, wobei vorzugsweise
der Drehpunkt (8d) des Übertragungsmechanismus (8) an oder in dem Getriebesteller (1) ausgebildet ist.

7. Getriebe nach einem der Ansprüche 4 oder 5, wobei
das Übertragungselement (8c) translatorisch verschiebbar ausgebildet ist, um die Umsetzung der Stellbewegung (1a) in die Schaltbewegung (5a) zu bewirken.

8. Getriebe nach einem der Ansprüche 3 bis 7, aufweisend
einen Längenausgleichsmechanismus, der dazu ausgebildet ist, einen Längenausgleich zwischen den Koppelpunkten (8a, 8b) bei Aufbringen der Stellbewegung (1a) durchzuführen.

9. Getriebe nach Anspruch 8, wobei
der Längenausgleichsmechanismus eine elastische Vorspannung aufweist, die zwischen den Koppelpunkten (8a, 8b) wirkt.

10. Getriebe nach einem der Ansprüche 3 bis 9, wobei
der Getriebesteller (1) über den ersten Koppelpunkt (8a) mit dem Übertragungsmechanismus (8) zur Aufprägung der Stellbewegung (1a) auf den Übertragungsmechanismus (8) verbunden ist.

11. Getriebe nach einem der Ansprüche 3 bis 10, wobei
die Verbindung zwischen dem Getriebesteller (1) und dem Übertragungsmechanismus (8) in dem ersten Koppelpunkt (8a) drehfest und/oder einstückig ausgebildet ist.

12. Getriebe nach einem der Ansprüche 3 bis 10, wobei
die Verbindung zwischen dem Getriebesteller (1) und dem Übertragungsmechanismus (8) in dem ersten Koppelpunkt (8a) drehbar ausgebildet ist oder eine Kontaktflächenpaarung aufweist.

13. Getriebe nach einem der Ansprüche 3 bis 12 aufweisend
ein Schaltelement (5), insbesondere eine Schaltmuffe, das dazu ausgebildet ist, eine Schaltbewegung (5a) durchzuführen, um in dem Getriebe eine Schaltstellung einzustellen, wobei
das Schaltelement (5) über den zweiten Koppelpunkt (8b) mit dem Übertragungsmechanismus (8) zur Aufprägung der Schaltbewegung (5a) auf das Schaltelement (5) verbunden ist, wobei
das Getriebe vorzugsweise für ein elektrisch oder hybridisch angetriebenes Fahrzeug und/oder für ein Nutzfahrzeug ausgebildet ist.

14. Getriebe nach Anspruch 13, wobei
die Verbindung zwischen dem Schaltelement (5) und dem Übertragungsmechanismus (8) in dem zweiten Koppelpunkt (8b) drehfest und/oder einstückig ausgebildet ist.

15. Getriebe nach Anspruch 13, wobei
die Verbindung zwischen dem Schaltelement (5) und dem Übertragungsmechanismus (8) in dem zweiten Koppelpunkt (8b) drehbar ausgebildet ist oder eine Kontaktflächenpaarung aufweist.

16. Antriebsstrang für ein Fahrzeug, aufweisend ein Getriebe nach einem der Ansprüche 1 bis 15, wobei
der Antriebsstrang für ein elektrisch oder hybridisch angetriebenes Fahrzeug und/oder für ein Nutzfahrzeug ausgebildet ist.

17. Fahrzeug aufweisend ein Getriebe nach einem der Ansprüche 1 bis 15 oder einen Antriebsstrang nach Anspruch 16, wobei
das Fahrzeug elektrisch oder hybridisch angetrieben ist und/oder ein Nutzfahrzeug ist.

## Claims

1. Transmission with a transmission actuator (1) for setting at least one shifted position in the transmission, which has at least one transmission shaft (2), wherein
the shifted position is embodied by a translation stage, wherein
the transmission actuator (1) is configured to perform an actuating movement (1a) in an actuating direction (1b) in order to set the at least one shifted position, wherein
a characteristic orientation direction of the transmission actuator (1) is not oriented parallel to the transmission shaft axis (2a) of the at least one transmission shaft (2), wherein
the characteristic orientation direction is the actuating direction (1b), wherein
the transmission has two different translation stages which are configured by gear stages and have different outside diameters,
**characterized in that**
the actuating direction (1b) is arranged substantially parallel to a tangent to the outer contour of the two translation stages, wherein the two translation stages are arranged on the same transmission shaft (2).

2. Transmission according to claim 1, wherein
the transmission actuator (1) can be activated hydraulically, pneumatically, electrically, magnetically and/or mechanically.

3. Transmission according to claim 1 or 2, having:
- a transfer mechanism (8) for transferring the actuating movement (1a) of the transmission actuator (1), wherein the transfer mechanism (8) has:
- a first coupling point (8a) which is configured to come into contact with the transmission actuator (1) and to absorb its actuating movement (1a), and
- a second coupling point (8b) which is configured to come into contact with a shift element (5) of the transmission, in particular with a shift collar, wherein
the transfer mechanism (8) is configured to convert the actuating movement (1a) into a shift movement (5a) which causes a shifted position to be set in the transmission.

4. Transmission according to claim 3, having
a transfer element (8c) which is configured to convert the actuating movement (1a) into the shift movement (5a).

5. Transmission according to claim 4, wherein
the transfer element (8c) is configured to cause a translation of the actuating movement (1a) into the shift movement (5a).

6. Transmission according to claim 4 or 5, wherein
the transfer element (8c) is mounted rotatably and is configured to generate a shift movement (5a) by means of rotation about a pivot point (8d) when the actuating movement (1a) is applied, wherein preferably
the pivot point (8d) of the transfer mechanism (8) is configured on or in the transmission actuator (1).

7. Transmission according to any one of claims 4 or 5, wherein
the transfer element (8c) is displaceably configured in translation in order to cause the conversion of the actuating movement (1a) into the shift movement (5a).

8. Transmission according to any one of claims 3 to 7, having
a length compensation mechanism which is configured to perform a length compensation between the coupling points (8a, 8b) when the actuating movement (1a) is applied.

9. Transmission according to claim 8, wherein
the length compensation mechanism has an elastic prestress acting between the coupling points (8a, 8b).

10. Transmission according to any one of claims 3 to 9, wherein
the transmission actuator (1) is connected via the first coupling point (8a) to the transfer mechanism (8) for applying the actuating movement (1a) to the transfer mechanism (8).

11. Transmission according to any one of claims 3 to 10, wherein
the connection between the transmission actuator (1) and the transfer mechanism (8) at the first coupling point (8a) is configured to be non-rotatable and/or integral.

12. Transmission according to any one of claims 3 to 10, wherein
the connection between the transmission actuator (1) and the transfer mechanism (8) is configured to be rotatable at the first coupling point (8a) or has a contact surface pairing.

13. Transmission according to any one of claims 3 to 12, having
a shift element (5), in particular a shift collar, which is configured to perform a shift movement (5a) in order to set a shifted position in the transmission, wherein
the shift element (5) is connected via the second coupling point (8b) to the transfer mechanism (8) for applying the shift movement (5a) to the shift element (5), wherein
the transmission is preferably configured for an electrically or hybrid-powered vehicle, and/or for a utility vehicle.

14. Transmission according to claim 13, wherein
the connection between the shift element (5) and the transfer mechanism (8) at the second coupling point (8b) is configured to be non-rotatable and/or integral.

15. Transmission according to claim 13, wherein
the connection between the shift element (5) and the transfer mechanism (8) at the second coupling point (8b) is configured to be rotatable or has a contact surface pairing.

16. Drive train for a vehicle, having a transmission according to any one of claims 1 to 15, wherein
the drive train is configured for an electrically or hybrid-powered vehicle, and/or for a utility vehicle.

17. Vehicle having a transmission according to any one of claims 1 to 15 or a drive train according to claim 16, wherein
the vehicle is electrically or hybrid-powered and/or is a utility vehicle.

## Revendications

1. Transmission avec un organe de réglage de transmission (1) pour régler au moins une position de commutation dans la transmission qui présente au moins un arbre de transmission (2), dans laquelle
la position de commutation est incarnée par un rapport de transmission, dans laquelle
l'organe de réglage de transmission (1) pour le réglage de la au moins une position de commutation est configuré pour mettre en oeuvre un mouvement de réglage (1a) dans une direction de réglage (1b), dans laquelle
une direction d'orientation caractéristique de l'organe de réglage de transmission (1) est orientée non parallèlement par rapport à l'axe d'arbre de transmission (2a) du au moins un arbre de transmission (2), dans laquelle
la direction d'orientation caractéristique est la direction de réglage (1b), dans laquelle
la transmission présente deux rapports de transmission différents qui sont formés par des rapports d'engrenages et présentent des diamètres extérieurs différents,
**caractérisée en ce que**
la direction de réglage (1b) est disposée sensiblement parallèlement à une tangente au niveau du contour extérieur des deux rapports de transmission, dans laquelle les deux rapports de transmission sont disposés sur le même arbre de transmission (2).

2. Transmission selon la revendication 1, dans laquelle
l'organe de réglage de transmission (1) peut être actionné hydrauliquement, pneumatiquement, électriquement, magnétiquement et/ou mécaniquement.

3. Transmission selon la revendication 1 ou 2, présentant :
- un mécanisme de transfert (8) pour transmettre le mouvement de réglage (1a) de l'organe de réglage de transmission (1), dans laquelle le mécanisme de transmission (8) présente :
- un premier point de couplage (8a) qui est configuré pour entrer en contact avec l'organe de réglage de transmission (1) et recevoir son mouvement de réglage (1a), et
- un second point de couplage (8b) qui est configuré pour entrer en contact avec un élément de commutation (5) de la transmission, en particulier avec un manchon de commutation, dans laquelle
le mécanisme de transfert (8) est configuré pour convertir le mouvement de réglage (1a) en un mouvement de commutation (5a) qui exerce un réglage d'une position de commutation dans la transmission.

4. Transmission selon la revendication 3, présentant
un élément de transfert (8c) qui est configuré pour convertir le mouvement de réglage (1a) en mouvement de commutation (5a).

5. Transmission selon la revendication 4, dans laquelle
l'élément de transfert (8c) est configuré pour exercer une surmultiplication du mouvement de réglage (1a) en mouvement de commutation (5a).

6. Transmission selon la revendication 4 ou 5, dans laquelle
l'élément de transfert (8c) est monté de manière à pouvoir tourner et est configuré pour générer un mouvement de commutation (5a) au moyen d'une rotation autour d'un point de rotation (8d) lors de l'application du mouvement de réglage (1a), dans laquelle de préférence
le point de rotation (8d) du mécanisme de transfert (8) est formé au niveau de ou dans l'organe de réglage de transmission (1).

7. Transmission selon l'une quelconque des revendications 4 ou 5, dans laquelle
l'élément de transfert (8c) est configuré de manière déplaçable en translation pour exercer la conversion du mouvement de réglage (1a) en mouvement de commutation (5a).

8. Transmission selon l'une quelconque des revendications 3 à 7, présentant
un mécanisme de compensation de longueur qui est configuré pour réaliser une compensation de longueur entre les points de couplage (8a, 8b) lors de l'application du mouvement de réglage (1a).

9. Transmission selon la revendication 8, dans laquelle
le mécanisme de compensation de longueur présente une précontrainte élastique qui agit entre les points de couplage (8a, 8b).

10. Transmission selon l'une quelconque des revendications 3 à 9, dans laquelle
l'organe de réglage de transmission (1) est connecté au mécanisme de transfert (8) par le premier point de couplage (8a) pour l'application du mouvement de réglage (1a) au mécanisme de transfert (8).

11. Transmission selon l'une quelconque des revendications 3 à 10, dans laquelle
la liaison entre l'organe de réglage de transmission (1) et le mécanisme de transfert (8) est configurée de manière fixe en rotation et/ou d'un seul tenant dans le premier point de couplage (8a).

12. Transmission selon l'une quelconque des revendications 3 à 10, dans laquelle
la liaison entre l'organe de réglage de transmission (1) et le mécanisme de transfert (8) dans le premier point de couplage (8a) est configurée de manière à pouvoir tourner ou présente une paire de surfaces de contact.

13. Transmission selon l'une quelconque des revendications 3 à 12, présentant
un élément de commutation (5), en particulier un manchon de commutation, qui est configuré pour réaliser un mouvement de commutation (5a), pour régler une position de commutation dans la transmission, dans lequel
l'élément de commutation (5) est relié au mécanisme de transfert (8) par l'intermédiaire du second point de couplage (8b) pour imprimer le mouvement de commutation (5a) à l'élément de commutation (5), dans lequel
la transmission est configurée de préférence pour un véhicule à transmission électrique ou hybride, et/ou pour un véhicule utilitaire.

14. Transmission selon la revendication 13, dans laquelle
la liaison entre l'élément de commutation (5) et le mécanisme de transfert (8) dans le second point de couplage (8b) est configurée de manière fixe en rotation et/ou d'un seul tenant.

15. Transmission selon la revendication 13, dans laquelle
la liaison entre l'élément de commutation (5) et le mécanisme de transfert (8) dans le second point de couplage (8b) est configurée de manière à pouvoir tourner ou présente une paire de surfaces de contact.

16. Train d'entraînement pour un véhicule, présentant une transmission selon l'une quelconque des revendications 1 à 15.
la chaîne cinématique est configurée pour un véhicule à transmission électrique ou hybride et/ou pour un véhicule utilitaire.

17. Véhicule présentant une transmission selon l'une quelconque des revendications 1 à 15 ou un train d'entraînement selon la revendication 16, dans lequel
le véhicule est à transmission électrique ou hybride et/ou est un véhicule utilitaire.
